# EUROPÄISCHE PATENTANMELDUNG

(11) **EP 2 228 192 A1**
(43) Veröffentlichungstag der Anmeldung: **15.09.2010**
(21) Anmeldenummer: 10155333.7
(22) Anmeldetag: 03.03.2010
(51) Int. Cl.: B29C 45/17

(54) **Spritzgießmaschine mit einer Holmzugvorrichtung**

(30) Priorität: 14.03.2009 DE 102009013237
(71) Anmelder: Sumitomo (SHI) Demag Plastics Machinery GmbH, 90571 Schwaig (DE)
(72) Erfinder: Schmid, Manfred, 90425 Nürnberg (DE)
(74) Vertreter: Hübner, Gerd

(57) **Zusammenfassung**

Eine Spritzgießmaschine umfasst ein Maschinenbett (1), eine daran gelagerte feste Werkzeugplatte (2), eine am Maschinenbett (1) gelagerte bewegliche Werkzeugplatte (3), eine am Maschinenbett (1) gelagerte Endplatte (5), und mehrere, zwischen fester Werkzeugplatte (2) und Endplatte (5) eingespannte Holme (6, 7), auf denen die bewegliche Werkzeugplatte (3) bei der Werkzeugöffnungs- und -schließbewegung verschiebbar geführt ist, wobei mindestens einer der Holme (6, 7) durch eine Holmzugvorrichtung (8) axial aus einer Werkzeugzone (W) zwischen fester und beweglicher Werkzeugplatte (2, 3) herausziehbar ist. Die Holmziigvorrichtung (8) weist einen auf der Endplatte (5) sitzenden, elektromotorischen Antrieb (19) aufweist, der über eine Getriebeeinrichtung (20, 26) mit dem mindestens einen ziehbaren Holm (7) gekoppelt ist.

## Beschreibung

Die Erfindung betrifft eine Spritzgießmaschine mit den im Oberbegriff des Patentanspruches 1 angegebenen Merkmalen.

Derartige Spritzgießmaschinen mit Holmzugvorrichtung sind in verschiedensten Ausführungsformen gängig und auf dem Markt vertreten. Die grundsätzlichen Komponenten solcher Spritzgießmaschinen umfassen ein Maschinenbett, eine daran montierte feste Werkzeugplatte zum Aufspannen einer Werkzeughälfte, eine am Maschinenbett beweglich gelagerte Werkzeugplatte zum Aufspannen der zweiten Formwerkzeughälfte und eine wiederum am Maschinenbett befestigte Endplatte, an der sich die die bewegliche Werkzeugplatte beaufschlagende Schließeinheit der Spritzgießmaschine rückseitig abstützt.

Zur stabilen Verbindung der endseitigen Maschinenplatten und zur Führung der beweglichen Werkzeugplatte sind zwischen fester Werkzeugplatte und Endplatte Holme eingespannt, auf denen die bewegliche Werkzeugplatte bei der Werkzeugöffnungs- und Schließbewegung verschiebbar geführt ist.

Je nach Einsatzzweck der Spritzgießmaschine kann als optionale Ausrüstung eine sogenannte Holmzugvorrichtung vorgesehen sein, mit deren Hilfe mindestens ein Holm - in der Regel einer der beiden oberen der vier in den Eckbereichen der Platten positionierten Holme - aus der Werkzeugzone, also dem Bereich zwischen der festen und beweglichen Werkzeugplatte, längsaxial herausgezogen werden kann. Damit ist es möglich, auch voluminösere Formhälften, die mit ihren Dimensionen die lichte Weite zwischen den Holmen übersteigen, problemlos und bequem auszuwechseln.

Durch offenkundige Vorbenutzung der Anmelderin ist eine Holmzugvorrichtung bekannt, bei der auf der Endplatte ein hydraulischer Antrieb auf der Basis einer Kolben-Zylinder-Anordnung vorgesehen ist. Letztere ist in ihrer eingefahrenen Baugröße bereits länger als die maximale Zugstrecke des von ihr gezogenen Holmes und wird beim Betätigen der Holmzugfunktion dann noch um die ausgefahrene Holmzuglänge vergrößert, so dass insgesamt der Kolben-Zylinder-Antrieb eine extreme Baulänge aufweist. Problematisch hierbei ist, dass der Kolben-Zylinder-Antrieb insbesondere im ausgefahrenen Zustand weit in die Werkzeugzone und/oder hinter die Endplatte ragt.

Schließlich ist aus der DE 44 46 692 C2 eine Formschließeinrichtung für eine Kunststoffspritzgießmaschine bekannt, bei der eine automatische Holmzugvorrichtung bei einer sogenannten Zwei-Platten-Maschine realisiert ist. Bei dieser ist der zu ziehende Holm mit einem Verlängerungsrohr axial über ein Gewinde nach Art einer Überwurfmutter gekoppelt. Ferner wird der Holm über eine Gleitführung auf der der Einspritzeinheit zugewandten Rückseite der festen Werkzeugplatte zum Entfernen aus der Werkzeugzone auf diese Seite ausgeschoben. Hierbei ist problematisch, dass die Raumverhältnisse dort aufgrund der Einspritzeinheit beengt sind.

Ferner ist bei dieser bekannten Holmzugvorrichtung von Nachteil, dass dort der Kraftaufbau über hydraulische Druckkissen und die Verstellung über die Gewindehülse zwischen Holm und Verlängerungsrohr erfolgt. Damit ist der Holmzug nicht vollständig automatisierbar, da dafür die Anschlüssen an den Druckkissen demontiert und die Verschraubungen des Druckkissens manuell gelöst werden müssen. Insoweit ist bei diesem Stand der Technik nur ein manueller Holmzug realisierbar. Schließlich ist beim Rückführen des Holmes in seine normale Maschinenposition dessen "Einfädeln" in die Gewindehülse des Verlängerungsrohres relativ schwierig zu bewerkstelligen und ebenfalls nur schwer automatisierbar.

Der Erfindung liegt ausgehend von den geschilderten Problemen des Standes der Technik die Aufgabe zugrunde, eine Spritzgießmaschine mit einer Holmzugvorrichtung so zu verbessern, dass sie einen kompakt bauenden und einfachen, gleichwohl sehr zuverlässigen Antrieb aufweist.

Diese Aufgabe wird laut Kennzeichnungsteil des Anspruches 1 dadurch gelöst, dass die Holmzugvorrichtung einen auf der Endplatte sitzenden, elektromotorischen Antrieb aufweist, der über eine Getriebeeinrichtung mit dem mindestens einen ziehbaren Holm gekoppelt ist.

Die erfindungsgemäße Basiskonstruktion schafft die Voraussetzung dafür, dass kompakt bauende Antriebs- und Getriebeeinheiten, wie etwa vorzugsweise ein Elektromotor und ein Spindel- oder Zahnstangenantrieb eingesetzt werden kann. Bei diesen Getriebeeinrichtungen ist das axialparallel zum ziehbaren Holm verlaufende Konstruktionselement in seiner Länge im wesentlichen auf die maximale Holmzuglänge begrenzbar, so dass sich gegenüber dem Hydraulikantrieb gemäß dem Stand der Technik eine drastische Verkürzung der Baulänge der Holmzugvorrichtung ergibt. Dadurch bleibt oberhalb des Bereiches zwischen fester Werkzeugplatte und Endplatte ein deutlich größerer Freiraum bzw. benötigt die Holmzugvorrichtung weniger Raum auf der den Werkzeugplatten abgewandten Rückseite der Endplatten beim Ausfahren. Dies stellt oft bei beengten Aufstellverhältnissen von Spritzgießmaschinen in Fabrikhallen ein unlösbares räumliches Problem beim geschilderten Stand der Technik dar.

Die erfindungsgemäße Spritzgießmaschine mit einer elektromotorisch angetriebenen Holmzugvorrichtung hat ferner den Vorteil, dass ein hydraulischer Antrieb mit allen entsprechenden Peripheriegeräten und speziellen Wartungsarbeiten entfallen kann. Darüber hinaus sind Hydraulikantriebe wegen des dabei eingesetzten Öls für Reinraumanwendungen deutlich weniger geeignet, wie ein elektromotorischer Antrieb. Letzterer ist ferner einfacher nachrüstbar und ermöglicht ein sehr präzises Verfahren des ziehbaren Holms.

Bevorzugte Weiterbildungen des Erfindungsgegenstandes sind in den abhängigen Ansprüchen angegeben, deren Merkmale, Einzelheiten und Vorteile sich aus der nachfolgenden Beschreibung eines Ausführungsbeispiels anhand der beigefügten Zeichnung ergeben. Es zeigen:

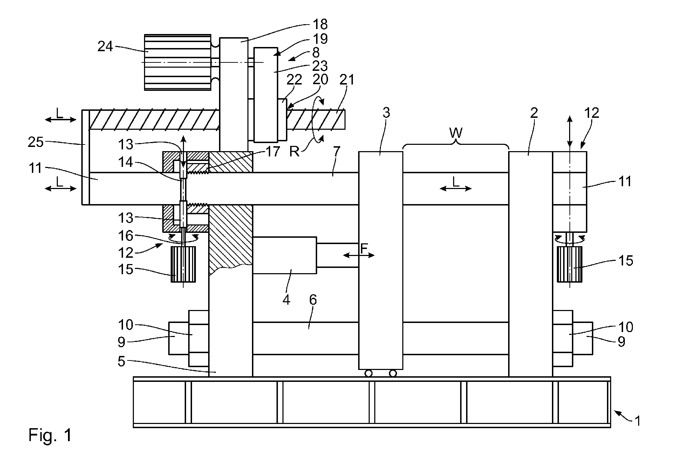

- Fig. 1 bis 4: schematische Seitenansichten von Spritzgießmaschinen in vier unterschiedlichen Ausführungsformen.

Anhand der Fig. 1 wird der grundsätzliche Aufbau der Werkzeugseite einer Spritzgießmaschine näher erläutert, wie er für alle vier Ausführungsformen gemäß den Fig. 1 bis 4 zutrifft. So ist ein Maschinenbett 1 vorgesehen, auf dem eine feste Werkzeugplatte 2 gelagert ist. An dieser ist eine (nicht dargestellte) Werkzeughälfte aufgespannt. Ferner weist die feste Werkzeugplatte 2 zentral eine Einspritzdüse auf, über die der schmelzflüssige Kunststoff von der nicht dargestellten Einspritzeinheit (von rechts bezogen auf die Figuren) in das Formwerkzeug eingespritzt wird.

In Werkzeugverfahrrichtung F ist ferner die bewegliche Werkzeugplatte 3 auf dem Maschinenbett 1 gelagert, die die (nicht dargestellte) zweite Werkzeughälfte auf ihrer der festen Werkzeugplatte 2 zugewandten Seite trägt. Die Verfahrbewegung der beweglichen Werkzeugplatte 3 wird durch die schematisch dargestellte Schließeinheit 4 bewerkstelligt, bei der es sich in der Regel um einen Kniehebel-Mechanismus handelt. Dieser stützt sich an der ebenfalls auf dem Maschinenbett 1 gelagerten Endplatte 5 ab.

Zur Stabilisierung der Werkzeugplatten 2, 3 und der Endplatte 5 zueinander und zur Führung der beweglichen Werkzeugplatte 3 sind vier Holme in den Platteneckbereichen vorgesehen, von denen in den Zeichnungen der dem Betrachter zugewandte untere Holm 6 und obere Holm 7 erkennbar sind. Der obere Holm 7 ist mit einer als Ganzes mit 8 bezeichneten automatischen Holmzugvorrichtung ausgerüstet, deren unterschiedliche Ausführungsformen anhand der Fig. 1 bis 4 noch näher erläutert werden.

Die unteren Holme 6 ragen mit ihren einander abgewandten Enden 9 über die feste Werkzeugplatte 2 bzw. Endplatte 5 hinaus und sind dort mittels entsprechender Holmmuttern 10 verspannt.

Die oberen Holme 7 sind mit ihren Enden 11 ebenfalls über die Platten 2, 5 hinaus verlängert und sind dort mit an fester Werkzeugplatte 2 bzw. Endplatte 5 angeordneten Verriegelungseinrichtungen 12 verriegelbar.

Die Verriegelungseinrichtungen 12 weisen jeweils radial bezüglich der Holm-Längsachse verschiebbare Riegelbolzen 13 auf, die in entsprechende Aufnahmenuten 14 in den Holmen 7 zum Verriegeln eingefahren und zum Freigeben wieder darauf ausgefahren werden können. Die Betätigung dieser Riegelbolzen 13 erfolgt durch einen Elektromotor 15, der über einen Gewindetrieb 16 die Riegelbolzen 13 betätigt.

Schließlich ist in den Fig. 1 bis 4 noch eine weitere Spindelmutter 17 auf der der beweglichen Werkzeugplatte 3 abgewandten Außenseite der Endplatte 5 auf dem Holm 7 angedeutet, mit der eine Werkzeughöhenverstellung in bekannter Weise durchgeführt werden kann.

Wie oben erwähnt, werden im Folgenden die unterschiedlichen Ausführungsformen der Holmzugvorrichtung 8 näher erläutert. Diesen ist gemeinsam, dass oberhalb der Endplatte 5 über einen daran gehaltenen Träger 18 ein elektromotorischer Antrieb 19 der Spritzgießmaschinen angeordnet ist.

Bei der Ausführungsform gemäß Fig. 1 ist in diesem Träger 18 ferner ein Spindeltrieb 20 montiert, dessen Antriebsspindel 21 axialparallel zum ziehbaren Holm 7 oberhalb (wie gezeigt) oder seitlich der Endplatte 5 verläuft. Die Antriebsspindel 21 wird über eine drehbar am Träger 18 angeflanschte Spindelmutter linear angetrieben, die über einen Zahnriemen 23 mit der Abtriebswelle des an den Träger 18 angeflanschten Elektromotors 24 in Drehung versetzt wird. Das auf Höhe des überstehenden Endes 11 des Holmes 7 angeordnete Ende der Antriebsspindel 21 ist über eine Kopplungstraverse 25 mit dem Holm 7 verbunden. Antriebstechnisch wird also die Rotationsbewegung R der Spindelmutter 22 in eine Linearbewegung L der Antriebsspindel 21 umgesetzt, die gleichermaßen auf den Holm 7 übertragen wird.

Zum automatisierten Ziehen des Holms 7 werden bei geöffneter beweglicher Werkzeugplatte 2 die Verriegelungseinrichtungen 12 an der festen Werkzeugplatte 2 und Endplatte 5 durch Rückziehen der Riegelbolzen 13 gelöst und der Antrieb 19 aktiviert. Die nach links gemäß Fig. 1 laufende Antriebsspindel 21 nimmt den Holm 7 entsprechend mit und zieht ihn aus der festen Werkzeugplatte 2 heraus. Insoweit ist dann die zwischen fester Werkzeugplatte 2 und beweglicher Werkzeugplatte 3 liegende Werkzeugzone W frei von oben und vorne zugänglich.

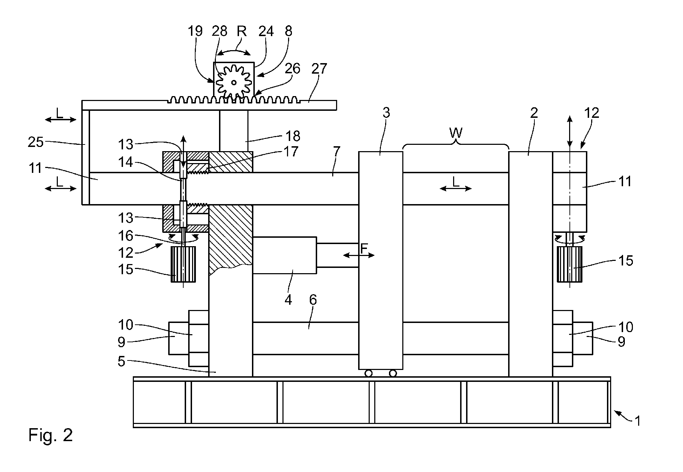

Bei der Ausführungsform gemäß Fig. 2 ist statt eines Spindeltriebs 20 ein Zahnstangenantrieb 26 vorgesehen, dessen axialparallel zum Holm 7 oberhalb (wie gezeigt) oder seitlich der Endplatte 5 verlaufende Zahnstange 27 von einem Abriebsritzel 28 des Elektromotors 24 in Linearbewegung L versetzbar ist. Über die wiederum vorgesehene Kopplungstraverse 25 wird damit der Holm 7 bei geöffneter Verriegelungseinrichtung 12 nach links bezogen auf Fig. 2 mitgenommen und die Werkzeugzone W geöffnet.

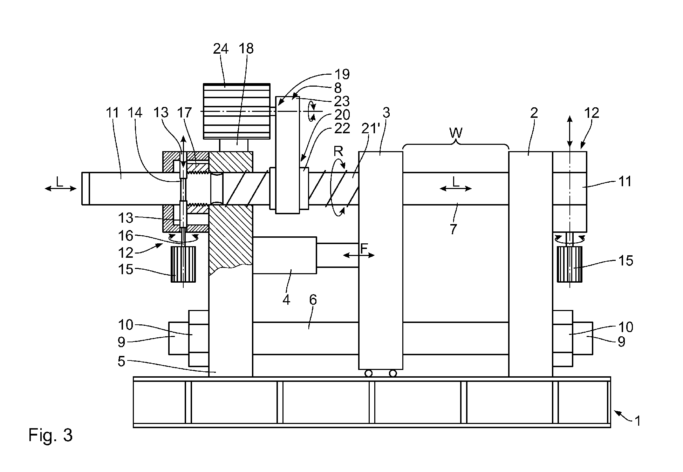

Bei der Ausführungsform gemäß Fig. 3 ist wiederum ein Spindeltrieb 20 vorgesehen. Dabei ist jedoch die Antriebsspindel 21' direkt auf dem ziehbaren Holm 7 angelegt. Entsprechend sitzt darauf axial unverschieblich, jedoch drehbar die Spindelmutter 22, die über einen Zahnriemen 23 mit dem Elektromotor 24 gekoppelt ist. Durch eine Rotationsbewegung der Spindelmutter 22 wird der Holm 7 direkt in eine Linearbewegung L versetzt und kann bei gelöster Verriegelungseinrichtung 12 aus der festen Werkzeugplatte 2 zur Öffnung der Werkzeugzone W herausgezogen werden.

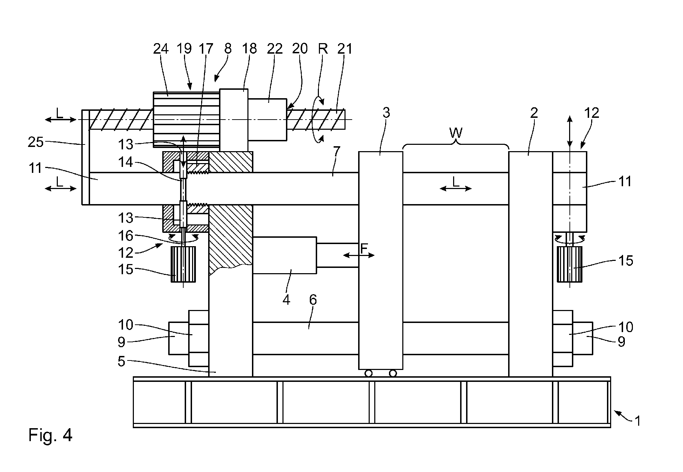

In Fig. 4 schließlich ist eine Variante gezeigt, bei der der Elektromotor 24 aus Hohlwellenmotor ausgeführt ist, der mit seiner als Spindelmutter ausgeführten Hohlwelle mit der Antriebsspindel 21 in Eingriff steht und für den Linearantrieb analog Fig. 1 sorgen kann.

## Patentansprüche

1. Spritzgießmaschine umfassend
- ein Maschinenbett (1),
- eine daran gelagerte feste Werkzeugplatte (2),
- eine am Maschinenbett (1) gelagerte bewegliche Werkzeugplatte (3),
- eine am Maschinenbett (1) gelagerte Endplatte (5), und
- mehrere, zwischen fester Werkzeugplatte (2) und Endplatte (5) eingespannte Holme (6, 7), auf denen die bewegliche Werkzeugplatte (3) bei der Werkzeugöffnungs- und -schließbewegung verschiebbar geführt ist, wobei mindestens einer der Holme (6, 7) durch eine Holmzugvorrichtung (8) axial aus einer Werkzeugzone (W) zwischen fester und beweglicher Werkzeugplatte (2, 3) herausziehbar ist,
**dadurch gekennzeichnet, dass**
- die Holmzugvorrichtung (8) einen auf der Endplatte (5) sitzenden, elektromotorischen Antrieb (19) aufweist, der über eine Getriebeeinrichtung (20, 26) mit dem mindestens einen ziehbaren Holm (7) gekoppelt ist.

2. Spritzgießmaschine nach Anspruch 1, **dadurch gekennzeichnet, dass** die Getriebeeinrichtung einen axialparallel zum ziehbaren Holm (7) verlaufenden Spindeltrieb (20) aufweist.

3. Spritzgießmaschine nach Anspruch 2, **dadurch gekennzeichnet, dass** der Spindeltrieb (20) eine oberhalb oder seitlich der Endplatte (5) axialparallel zum ziehbaren Holm (7) verlaufende Antriebsspindel (21) aufweist, die mit dem ziehbaren Holm (7) über eine Kopplungstraverse (25) auf der der beweglichen Werkzeugplatte (3) abgewandten Seite der Endplatte (5) verbunden ist.

4. Spritzgießmaschine nach Anspruch 2, **dadurch gekennzeichnet, dass** die Antriebsspindel (21) direkt am ziehbaren Holm (7) ausgebildet ist.

5. Spritzgießmaschine nach Anspruch 2, **dadurch gekennzeichnet, dass** die Spindelmutter (22) des Spindeltriebs (21) über einen Zahnriemen (23) mit dem Elektromotor (24) des Antriebs (19) gekoppelt ist.

6. Spritzgießmaschine nach Anspruch 2, **dadurch gekennzeichnet, dass** die Spindelmutter des Spindeltriebs (21) an der Hohlwelle eines Hohlwellenmotors (24') des Antriebs (19) ausgebildet ist.

7. Spritzgießmaschine nach Anspruch 1, **dadurch gekennzeichnet, dass** die Getriebeeinrichtung einen axialparallel zum ziehbaren Holm (7) verlaufenden Zahnstangenantrieb (26) aufweist.

8. Spritzgießmaschine nach Anspruch 7, **dadurch gekennzeichnet, dass** der Zahnstangenantrieb (26) eine oberhalb oder seitlich der Endplatte (5) axialparallel zum ziehbaren Holm (7) verlaufende Zahnstange (27) aufweist, die mit dem ziehbaren Holm (7) über eine Kopplungstraverse (25) auf der der beweglichen Werkzeugplatte (3) abgewandten Seite der Endplatte (5) verbunden ist.

9. Spritzgießmaschine nach Anspruch 1, **dadurch gekennzeichnet, dass** der Elektromotor (24, 24') des elektromotorischen Antriebs (19) auf die Endplatte (5) aufgesattelt ist.

10. Spritzgießmaschine nach Anspruch 1, **dadurch gekennzeichnet, dass** der mindestens eine ziehbare Holm (7) durch jeweils eine Verriegelungseinrichtung (12) mit der festen Werkzeugplatte (2) und der Endplatte (3) verriegelbar ist.
